# EUROPEAN PATENT APPLICATION

(11) **EP 2 752 635 A1**
(43) Date of publication of application: **09.07.2014**
(21) Application number: 13150228.8
(22) Date of filing: 04.01.2013
(51) Int. Cl.: F28D 20/00

(54) **Inlet stratification device**

(71) Applicant: Danmarks Tekniske Universitet - DTU, 2800 Kongens Lyngby (DK)
(72) Inventor: Spanggaard, Martin, 2000 Frederiksberg (DK); Andersen, Elsa, 8660 Skanderborg (DK)
(74) Representative: Pálsson, Ingólfur

(57) **Abstract**

An inlet stratification (5) is adapted to be arranged vertically in a tank (1) during operation. The stratification device (5) comprises an inlet pipe (6) formed of a flexible porous material and having a lower and upper end. The lower end of the inlet pipe (6) is connected to a bottom cap (10) with an inlet passage way (16). The upper end of the inlet pipe (6) is connected with a top cap (9). The top cap (9) and the bottom cap (10) are mutually connected by means of a wire (8) and the top cap (9) is configured as a floating device providing a buoyancy force larger than the downwardly directed force due to the wire (8), the inlet pipe (6) and any deposited on the above pass during operation.

## Description

The present invention relates to an inlet stratification device for providing and maintaining stratification of a fluid in a tank, said stratification device being adapted to be arranged vertically in the tank during operation and comprising:
an inlet pipe at least partially formed of a flexible porous material and having a lower and an upper end,
the lower end of the inlet pipe being connected to a bottom cap with an inlet passage way in such a way that the lower end of the inlet pipe is provided with a predetermined first cross-sectional shape,
the upper end of the inlet pipe being provided with a floating device ensuring that the stratification device always is in a vertical position during operation and the upper end of the inlet pipe being connected with a top cap in such a way that the upper end of the pipe is provided with a predetermined second cross-sectional shape, and
outlets from the inlet pipes being formed of the pores of the flexible porous material of the inlet pipe, the inlet pipe being configured to collapse and expand such that inflow and outflow through the pores of the flexible porous material of the inlet pipe is substantially prevented in regions of the inlet stratification device, where the temperature of the fluid inside the device differs from the temperature of the fluid outside of the device.

It is well-known that by leading heated water into a solar tank through a stratification device from the bottom of the tank, good stratification can be achieved in the tank. The thermal stratification is achieved because the stratification device ensures that the heated water in the stratification device only enters the tank when the temperature in the tank equals the temperature in the stratification device or when the water in the stratification device is forced to leave the stratification device at the top thereof. Good thermal stratification enhances the thermal performance of solar heating systems.

Different types of stratification devices are known. DE10212688 A1 and DE3905874 A2 disclose a tank with a vertically arranged stratification device comprising a rigid inlet pipe having a number of outlet openings provided with flaps that work as non-return valves.

WO 80/01714 A1 discloses a device for use in a tank containing liquid, wherein the liquid is caused to attain a condition of equilibrium, in which the temperature of the liquid increases in a steady manner from the bottom to the surface, i.e. is stratified.

Stratification devices consisting of a single inlet pipe formed of a porous fabric are known. Examples of such stratification devices, which are also called fabric stratifiers or fabric stratification manifolds, are disclosed in the articles "Fabric stratification manifolds for solar water heating", J.H. Davidson and D.A. Adams, Transaction of the ASME, volume 116, August 1984, pp. 130-136, and "Stratification enhancements in liquid thermal storage tanks", R.I. Loehrke et al, I. Energy, May-June 1979.

Additionally, WO 2006/084460 discloses an inlet stratification device comprising an inlet pipe of a flexible porous material and additionally an outer pipe surrounding the inlet pipe and being formed of a flexible porous material. The above document discloses essentially the features stated in the preamble of claim 1.

In the above-mentioned publication WO 2006/084460 it is mentioned that the inlet end and the opposite end of the stratification device may be connected to the top and the bottom of the tank respectively, that the stratification device may include a framed structure, the opposite ends of the inlet pipe and the at least one outer pipe being fixed to the framed structure, and that the inlet end of the stratification device can be secured to the bottom of the tank and the opposite end of the stratification device may be provided with a floating device ensuring that the stratification device always is in a vertical position. Mounting of the top or bottom cap inside the tank is rather difficult, especially in smaller tanks. The same goes for providing the stratification device with the framed structure and arrange the stratification device with the framed structure inside the tank. Securing the inlet end or bottom cap of the stratification device to the bottom of the tank and provide a floating device at the opposite end cause that the inlet fabric pipe is subjected to an excessive force due to the buoyancy of the floating device and thereby interfere with the function of the stratification device.

The object of the present invention is to overcome at least some of the above-mentioned drawbacks and especially to provide an un-expensive, well-functioning and easy to install stratification device.

In order to obtain the above object, the inlet stratification device according to the invention is **characterised in that** the top cap member and the bottom cap member are mutually connected by means of an elongated flexible non-elastic connection means having a length so as to define a pre-determined maximum longitudinal prestress and thereby a maximum longitudinal relative elongation of the inlet pipe during use when the floating device is subjected to a buoyancy force.

In other words, the length of the connection means is such that the buoyancy force to which the top cap member is subjected during operation is taken up by the connection means and not entirely by the flexible material of the inlet pipe.

By preventing excessive tension in the inlet pipe, optimal operation of the stratification device can be obtained.

According to an embodiment, such spacing between the top and the bottom cap member by means of the connection means, the flexible material of the inlet pipe is subjected to maximum longitudinal relative elongation and a predetermined longitudinal relative slack is obtained for proper operation of the device.

In an embodiment, the connection mean has such a length that the relative longitudinal slack or relative longitudinal elongation of the inlet pipe is within +/- 10 %.

The connection means may comprise a single flexible element centrally connected to the top cap member and to the bottom cap member respectively.

Thereby, a very simple and cost-effective solution is obtained.

However, the flexible connection means may also comprise a number of flexible connection members connected mutually spaced to the top cap member and to the bottom cap member respectively. The number of connection members may be three evenly spaced connection members and they are preferably arranged inside the inlet pipe. However, they may also be arranged radially outwardly spaced from an outer pipe.

The connection element(s) may be a yarn, a thread or a rope of plastic material such as PVDF or another suitable material. However, it should be noted that the connection elements may also be a wire or a chain with links of plastic or other suitable materials such as metal.

The floating device is configured so as to provide a buoyancy force capable of applying tension to the non-elastic connection means so as to ensure that the stratification device is always in a vertical position when submerged in liquid during use.

In other words, the floating device is configured so as to provide a buoyancy force larger than a downwardly directed force due to the top cap member, the connection means, the inlet tube, possible outer tube and any deposited on the above parts during operation. In an advantageous embodiment, the top cap member is configured as a floating device providing the buoyancy needed for ensuring a vertical position of the stratification device during use.

As a result, a very simple an inexpensive stratification device is obtained.

According to an embodiment of the invention, the bottom cap member and the top cap member each comprises a first ledge with a first circumference corresponding to the circumference of the inlet pipe, the lower end of the inlet pipe being connected to the first ledge of the bottom cap member and the upper end of the inlet pipe being connected to the first ledge of the top cap member.

According to a further embodiment, at least one outer pipe surrounds the inlet pipe in spaced relation thereto and being at least partially formed of a flexible porous material having outlets formed of the pores of the flexible material and having a lower end being connected to the bottom cap member outwardly spaced from the inlet pipe and an upper end being connected to the cap member top outwardly spaced from the inlet pipe.

According to the invention, the bottom cap member and the top cap member each comprises a second ledge with a large circumference larger than that corresponding to the circumference of the inlet pipe, the large circumference of the second ledge corresponds to the circumference of the outer pipe, the lower end of the outer pipe being connected to the second ledge of the bottom cap and the upper end of the outer pipe being connected to the second ledge of the top cap.

In an alternative embodiment, the top cap member comprises an inner preferably cylindrical body and at least one outer ring arranged coaxially with the inner body, the upper end of the inlet pipe being clamped between the inner body and an adjacent first outer ring. When the inlet stratification device comprises an outer pipe, the upper end of the outer pipe is clamped between the first outer ring and a second outer ring. When the inlet stratification device comprises additional outer pipes, the upper end of the additional outer pipes are each clamped between an adjacent inner and adjacent outer ring.

The upper surface of the top cap member can slant outwardly and downwardly from the centre thereof, i.e. be cone-shaped or dome-shaped. Thereby, sediments or deposits such as lime deposits may be dislodged from the upper surface.

According to an embodiment, the inlet pipe is a closed pipe apart from the inlet passage way of the bottom cap member and the outlets, and the surfaces of the inlet pipe and the outer pipe are concentric and parallel where the temperature of the fluid outside of the device is substantially equal to the temperature of the fluid inside the device.

According to the invention, the flexible porous material of the pipe(s) is/are a fabric.

In other words, the flexible porous material of the inlet pipe can be a fabric and the material of the at least one outer pipe can be a fabric.

According to a further embodiment, the area of the cross-sectional shape of the inlet pipe is less at the lower end than at the upper end thereof.

In other words, as the circumference of the inlet pipe is the same at the upper and lower end thereof, the cross-sectional shape at the lower end is more uplong than the cross-sectional shape at the upper end.

The above differences in cross-sectional shape is obtained by providing the ledge(s) of the top cap and the bottom cap member with an outer cross-sectional shape corresponding to the desired cross-sectional shape of the inlet pipe at the lower end and the upper end, respectively. l.e. the first ledge of the top cap member is provided with a cross-sectional shape having a larger area than the cross-sectional shape of the first ledge of the bottom cap member.

The cross-sectional shape at the upper end of the pipe(s) can be chosen so as to optimise the area to circumference ratio, optimally circular, and at the lower end uplonged with a major axis and a minor axis.

Tests have shown that 10-15 % better results are thereby obtained compared to using a circular shape of the lower end of the inlet pipe.

According to a further embodiment, the major axis is 1,3-20 times longer than the minor axis, preferably 1,5-10 and alternatively 2-5 times longer than the minor axis.

According to another embodiment, the inlet passage way of the bottom cap member has a cross-section that gradually changes from a circular shape to an uplong shape as seen from an outer lower end to an upper inner end of the bottom cap member.

The cross-sectional shape at the upper inner end of the bottom cap member can preferably essentially correspond to the desired cross-sectional shape at the lower end of the inlet pipe.

The inlet passage way of the bottom cap member may be provided with an inner thread adapted for mating with an outer thread of an inlet tube of the tank. Thereby, a very convenient and fast mounting of the device to the bottom area of a tank is obtained.

The top cap member can be formed of a foam plastic material such as foamed PE with a closed cell. However, the top cap member can also be provided with one or more cavities so as to provide the buoyancy force needed.

Finally, the present invention relates to a tank comprising an inlet stratification device according to the invention.

The pipes of flexible material or fabric may be formed of a knitted woven or non-woven polymeric or natural material such as PTFE, PE, PVDF, PP, PVC, PA, Dacron®, OrIon®, Acrilan®, Polylycra®, Creslan® acrylic and Poly Taffetta.

According to a broader aspect, the present invention relates to an inlet stratification device for providing and maintaining stratification of a fluid in a tank, said stratification device being adapted to be arranged vertically in the tank during operation and comprising an inlet pipe, at least partially formed of a flexible porous material and having a lower and en upper end, the lower end of the inlet pipe being connected to a bottom cap member with an inlet passage way in such a way that the lower end of the inlet pipe is provided with a predetermined first cross-sectional shape, the upper end of the inlet pipe being connected to a top cap member in such a way that the upper end of the pipe is provided with a predetermined second cross-sectional shape, and outlets from the inlet pipe being formed of pores of the flexible porous material of the inlet pipe, the inlet pipe being configured to collapse and expand such that inflow and outflow through the pores of the flexible porous material of the inlet pipe is substantially prevented in regions of the inlet stratification device where the temperature of the fluid inside the device differs from the temperature of the fluid outside of the device, **characterised in that** the area of the cross-sectional shape of the inlet pipe is less at the lower end than at the upper end.

In other words, as circumference of the inlet pipe is the same at the upper and lower end thereof, the cross-sectional shape at the lower end is more uplong than the cross-sectional shape at the upper end.

Tests have shown that 10-15 % better results are thereby obtained compared to using a circular shape of the lower end of the inlet pipe and the upper end of the inlet pipe.

The bottom cap member and the top cap member may each comprise a first ledge with a first circumference corresponding to the circumference of the inlet pipe, the lower end of the inlet pipe being connected to the first ledge of the bottom cap member and the upper end of the inlet pipe being connected to the first ledge of the top cap member.

The inlet stratification device may comprise at least one outer pipe surrounding the inlet pipe in spaced relation thereto and being at least partially formed of a flexible porous material having outlets formed of the pores of the flexible material and having a lower end being connected to the bottom cap outwardly spaced from the inlet pipe and an upper end being connected to the top cap member upwardly spaced from the inlet pipe.

The bottom and the top cap member may each comprise a second ledge with a large circumference, larger than that corresponding to the circumference of the inlet pipe, the large circumference of the second ledge corresponding to the circumference of the outer pipe, the lower end of the outer pipe being connected to the second ledge of the bottom cap member and the upper end of the outer pipe being connected to the second ledge of the top cap member.

The inlet pipe may be a closed pipe apart from the inlet passage way and the surfaces of the inlet pipe and the outlet pipe are concentric and parallel where the temperature of the fluid outside of the device is substantially equal to the temperature of the fluid inside of the device.

The flexible porous material of the pipe(s) is/are preferably a fabric.

As mentioned above, the cross-sectional shape of the lower end of the pipe is preferably more uplong than the cross-sectional shape at the upper end thereof.

The above differences in cross-sectional shape is obtained by providing the ledge of the top cap member and the bottom cap member with an outer cross-sectional shape corresponding to the desired cross-sectional shape of the inlet pipe at the lower end and the upper end, respectively. l.e. the first ledge of the top cap member is provided with a cross-sectional shape having a larger area than the cross-sectional shape of the first ledge of the bottom cap member.

The cross-sectional shape of the upper end of the inlet pipe may be chosen so as to optimise the area to a circumference ratio, optimally circular, and the lower end uplong with a major axis and a minor axis.

Tests have shown that the 10-15 % better results are thereby obtainable compared to using a circular cross-sectional shape of the lower end of the inlet pipe and the upper end of the inlet pipe.

The major axis may be at least 1.3-20 times longer than the minor axis, preferably 1.5-10 times longer, and alternatively 2-5 times longer than the minor axis.

The inlet passage way of the bottom cap member may have a cross-section that gradually changes from a circular shape to an uplong shape as seen from an outer lower end to an upper inner end of the bottom cap member.

The cross-sectional shape at the upper inner end of the bottom cap member can preferably essentially correspond to the desired cross-sectional shape at the lower end of the inlet pipe.

The inlet passage way of the bottom cap member may be provided with an inner thread adapted for mating with an outer thread of the inlet tube of the tank. Thereby, a very convenient and fast mounting of the stratification device to the bottom area of a tank is obtained.

Finally, it should be noted that the broader aspect of the invention also comprises the embodiment and features describes as claimed in relation to the embodiment of the invention comprising the floating device and the flexible connection means between the top cap member and the bottom cap member. Therefore, it is in the broader aspect of the invention possible to use other means to arrange the stratification device vertically in a tank than connection the lower end of the stratification device to the bottom of a tank and providing the upper end with a floating device and connecting the lower and upper end by means of a flexible connection means. Thus, it is also possible to arrange the stratification device in a tank by connecting the lower end thereof to the bottom of the tank and the upper end thereof to the top of the tank or provide the stratification device with a rigid frame structure and arrange it vertically in a tank.

The stratification device according to the invention can as described in WO 2006/084460 be used in a number of different applications such as:
- Water storages for solar collector systems:
   Inlet stratifiers in the solar collectoral loop (heat is transferred from the solar collector loop to the loop with storage water), return pipe from the space heating system and maybe return pipe with heat from the auxiliary energy system.
- Hot water tanks for solar domestic hot-water systems:
   Return pipe with heated water from the solar collectors (heat is transferred from the solar collector loop to the loop with domestic water), return pipe from circulation pipe and maybe return pipe with heat from the auxiliary energy system.
- Hot water storages for solar heating centrals:
   Return pipe with heat from the solar collector field (heat is transferred from the solar collector loop from the heat exchanger loop).
- Hot water storages for wood burners:
   Return pipe from the space heating system.
- Smart tanks where the auxiliary heated water volume can vary to fit actual consumption. These tanks can be heated by a number of different energy systems (even with a constant flow temperature) can be heated from the top of the tank with the stratification device according to the invention.

The invention is explained in detail below with reference to the drawings in which
Fig. 1 is a diagrammatic longitudinal sectional view to a first embodiment of a stratification device according to the invention arranged vertically in a tank,
Fig. 2 is an enlarged view of the lower portion of the stratification device comprising a bottom cap member,
Fig. 3 is a sectional view along the lines III-III in Fig. 2.
Fig. 4 is an enlarged view of the upper portion of the stratification device shown in Fig. 1, and
Fig. 5 is a sectional view along the lines V-V in Fig. 4.
Fig. 6 is an enlarged view corresponding to that in Fig. 4 of an alternative embodiment of a top cap member.

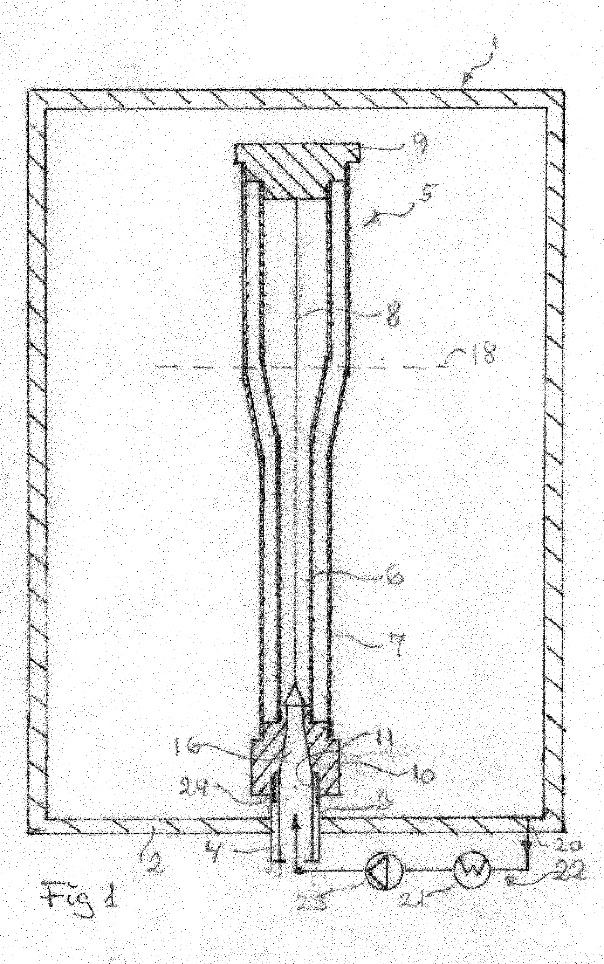

Fig. 1 discloses a tank 1 having a bottom 2 provided with an opening 3. An inlet tube 4 for heated water is sealingly arranged in the opening 3 and extends into the tank. An upper end of the inlet tube 4 arranged in the tank is provided with an outer thread 24.

Inside the tank, an embodiment of a stratification device 5 according to the invention is arranged vertically. The stratification device 5 comprises an inlet pipe 6 formed of a porous fabric and an outer pipe 7 surrounding the inlet pipe 6 in spaced relationship thereto. The outer pipe 7 is also formed of a porous fabric. The upper end of the inlet pipe 6 and the outer pipe 7 are connected to an upper top cap member 9 and the lower end of the inlet pipe 6 and outer pipe 7 are connected to a bottom cap member 10.

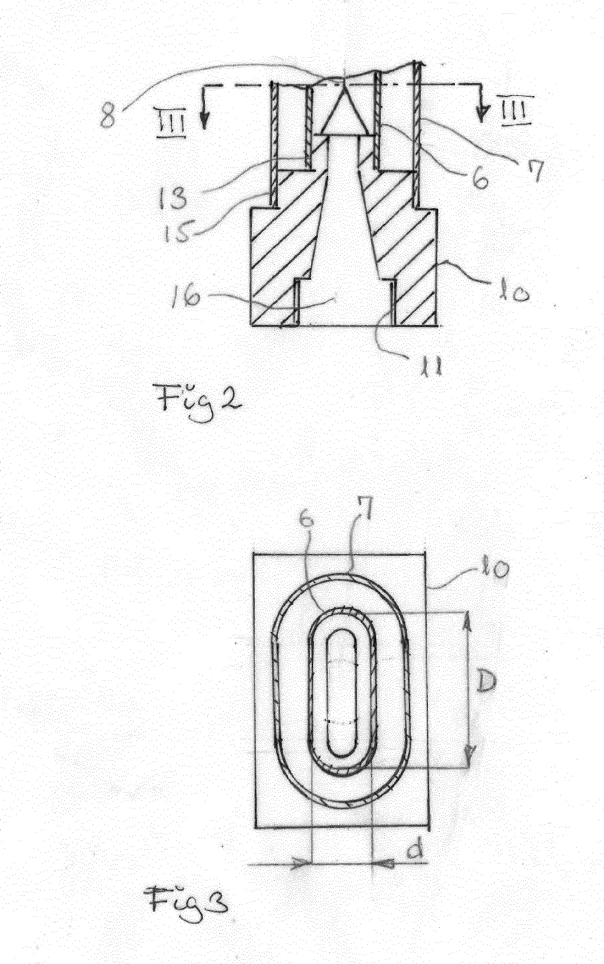

Reference is now also made to Figs. 2-5 from which it more clearly appears that the bottom cap member 10 comprises a first small ledge 13 of a small circumference corresponding to the inner circumference of the inlet pipe 6 and that the top cap member 9 comprises a first small ledge 12 of a small circumference corresponding to the inner circumference of the inlet pipe 6. The lower end of the inlet pipe 6 is connected to the first ledge 13 of the bottom cap member 10 and the upper end of the inlet pipe 6 is connected to the first ledge 12 of the top cap member 9. The top and bottom cap members each further comprises a second large ledge 14, 15 having a large circumference corresponding to the inner circumference of the outer pipe 7. The upper end of the outer pipe 7 is connected to the second large ledge 14 of the top cap member 9 and the lower end of the outer pipe 7 is connected to the second large ledge 15 of the bottom cap member 10.

The outer thread 24 of the inlet tube 24 is connected with an inner thread 11 of the bottom cap member.

The top cap member 9 and the bottom cap member 10 are connected by a centrally arranged wire 8 of a flexible non-elastic material extending in the interior of the inlet pipe 6. The top cap member 9 is configured as a floating device and can be formed of a foamed plastic material foam PE with closed cells. The top cap member 9 is configured so as to provide a buoyancy force larger than the downwardly acting force provided by the inlet pipe 6 and the outer pipe 7 and the connection wire 8 extending between the top cap and bottom cap and any deposits deposited on the above parts during operation. The above buoyancy force of the top cap member 9 causes that the stratification device will always be oriented vertically when submerged in water when in use.

The connection wire 8 has such a length between the top cap and the bottom cap that when it is subjected to tension due to the buoyancy of the top cap member 9 it defines a predetermined maximum longitudinal prestress and thereby maximal longitudinal relative elongation of the inlet pipe 6 and the outer pipe 7 during use.

In other words, the length of the connection wire 8 is such that the buoyancy force to which the top cap member 9 is subjected during operation is taken up by the connection wire 8 and not entirely by the flexible material of the inlet pipe 6 and optionally the outer pipe 7. By preventing excessive tension in the inlet pipe, optimal operation of the stratification device can be obtained.

Additionally, by means of the connection wire 8 such spacing is provided between the top and bottom cap member 9, 10 that the flexible material of the inlet pipe 6 and the outer pipe 7 obtain a predetermined maximum longitudinal relative elongation and/or a predetermined maximum longitudinal relative slack for a proper operation of the device.

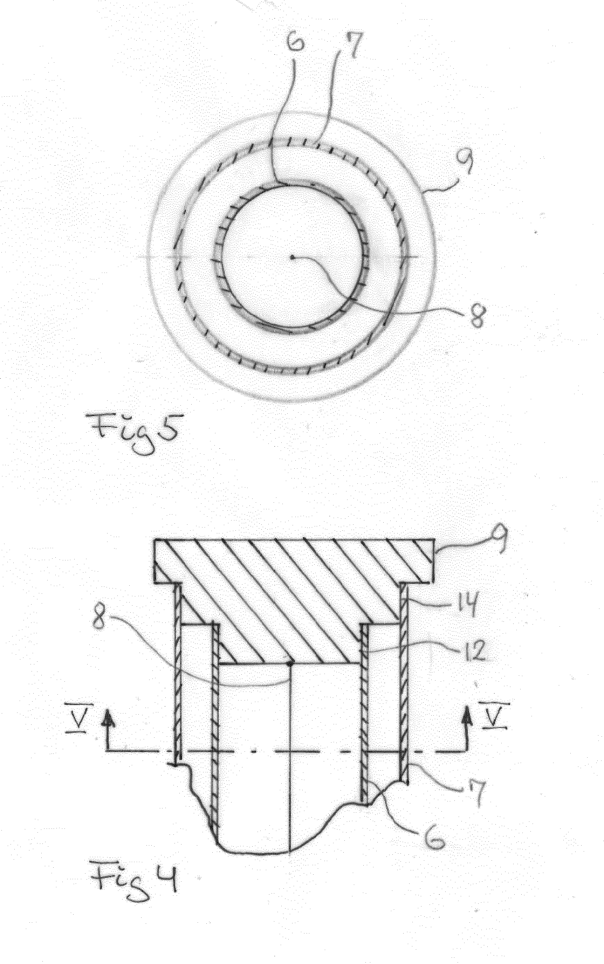

Good results have been obtained by a connection wire 8 having such a length that the relative longitudinal slack or relative longitudinal elongation of the inlet pipe or outer pipe is within +/- 10 %. As seen is in Figs. 4 and 5, the first small ledge 12 of the top cap member and the second large ledge 14 of the top cap member 9 have a circular cross-sectional shape so that the upper portion of the inlet pipe 6 and the upper portion of the outer pipe 7 also have a circular cross-sectional shape.

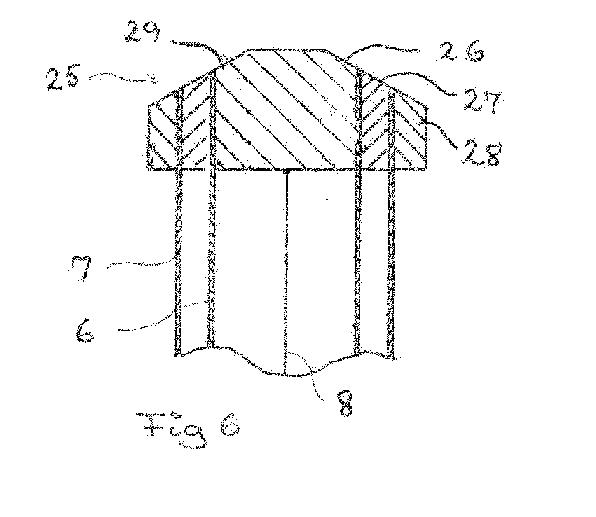

Fig. 6 discloses an alternative embodiment of a top cap member 25 comprising an inner central cylindrical body 26 and two coaxially arranged rings 27, 28, i.e. a first outer ring 27 and a second outer ring 28. The upper end of the inlet pipe 6 is clamped between the inner body 26 and the first outer ring 27 and the outer pipe 7 is clamped between the outer ring 27 and the second outer ring 28. Upper ends of the body and the rings form a cone-shaped upper surface 29 of the top cap member 25. The upper surface of the top cap member 9 shown in Figs. 1 and 4 can also have an upper surface slanting outwardly and downwardly from the centre thereof, i.e. be cone-shaped or dome-shaped so that deposits or sediments such as lime deposits may be dislodged therefrom.

From Figs. 2 and especially 3 it can be seen that the first small ledge 13 of the bottom cap member 10 and the second large ledge 15 of the bottom cap member 10 have an oval cross-sectional shape so that the lower portion of the inlet pipe 6 and the lower portion of outer pipe 7 has an oval shape. In the embodiment shown, the oval shape of the inlet pipe 6 has a major axis D and a minor d and the ratio D/d is about 2,7.

Further, from Figs. 2 and 3 it can be seen that the bottom cap member 9 is provided with an inlet passage way 16 having a cross-section that gradually changes from a circular shape to an uplong shape as seen from an outer lower end to an upper inner end of the bottom cap member 10. The cross-sectional shape at the upper inner end of the bottom cap member corresponds essentially to the cross-sectional shape of the first small ledge 13 of the bottom cap member 10 and thereby to the cross-sectional shape at the lower end of the inlet pipe 6.

Instead of being connected to the first small ledge 13 of the bottom cap member to the lower end 10, the inlet pipe 6 can be connected to the inner surface of the inlet tube 4 and extend through the inlet passage way 16 of the bottom cap member 9. Thereby, the desired cross-sectional shape of the lower end of the inlet pipe is obtained due to the shape of the inlet passage way 16 at the upper end thereof. In this case, the lower end of an optional outer pipe 7 is connected to a ledge such as the second large ledge 15 of the bottom cap member 10.

Reference is now again made to Fig. 1 in which a heating circuit 22 comprising an outlet 20 from the tank 1 and provided at the bottom of the tank 1. From this outlet 20, cold water flows through a diagrammatically shown heat exchanger 21 transferring heat from solar collectors. From the heat exchanger 21, the water flows back to the bottom of the tank through the inlet tube 4 and therefrom into the inlet passage way 16 of the bottom cap member 10 and into the inlet pipe 6. A pump 23 is arranged in the circuit 22.

The heated water from the heat exchanger 21 flows upwards into the inlet pipe 6. The water only flows through the pores or small openings of the inlet pipe 6 and the outer pipe 7 at the level at which the temperature of the stratified water in the tank corresponds to the temperature inside the stratification device 5 or when the water is forced to leave the stratification device at the top thereof. The latter is effected when the water temperature at the top of the tank is lower than that of the incoming heated water. As mentioned previously and as it is well known within the technical field of fabric stratification devices, the above function is possible as fabric pipes 6, 7 of the stratification device expands and collapse to equalise the pressure in the device and the tank to prevent inflow and outflow through the porous fabric pipes 6, 7 until a level of equal temperatures have been reached. In Fig. 1 the level of equal temperatures is indicated by the reference number 18, below that level the inlet pipe 6 and the outer pipe 7 are collapsed. In Fig. 1 the pipes are collapsed from the inlet passage way and a distance upwards, whereafter the pipes gradually expand until they are fully expanded at the level 18 of equal temperatures inside and outside the stratification device.

### List of reference numerals:

1. Tank
2. Bottom
3. Opening
4. Inlet tube
5. Stratification device
6. Inlet pipe
7. Outer pipe
8. Wire
9. Top cap member
10. Bottom cap member
11. Inner thread
12. First small ledge of top cap member 9
13. First small ledge of bottom cap member 10
14. Second large ledge of top cap member 9
15. Second large ledge of bottom cap member 10
16. Inlet passage way
17. Outer thread of inlet tube 4
18. Level
19.
20. Outlet from tank
21. Heat exchanger
22. Circuit
23. Pump
24. Outer thread
25. Top cap member
26. Inner ring
27. First outer ring
28. Second outer ring
29. Upper surface

## Claims

1. Inlet stratification device (5) for providing and maintaining stratification of a fluid in a tank (1), said stratification device (5) being adapted to be arranged vertically in the tank (5) during operation and comprising:
- an inlet pipe (6), at least partially formed of a flexible porous material and having a lower and an upper end,
- the lower end of the inlet pipe (6) being connected to a bottom cap member (9) with an inlet passage way (16) in such a way that the lower end of the inlet pipe (6) is provided with a predetermined first cross-sectional shape,
- the upper end of the inlet pipe (6) being provided with a floating device (9) ensuring that the stratification device (5) always is in a vertical position during operation and the upper end of the inlet pipe (6) being connected with a top cap member (9) in such a way that the upper end of the pipe is provided with a pre-determined second cross-sectional shape, and
- outlets from the inlet pipes (6) being formed of the pores of the flexible porous material of the inlet pipe, the inlet pipe being configured to collapse and expand such that inflow and outflow through the pores of the flexible porous material of the inlet pipe (1) is substantially prevented in regions of the inlet stratification device (5), where the temperature of the fluid inside the device differs from the temperature of the fluid outside of the device,
**Characterised in that** the top cap member (9) and the bottom cap member (10) are mutually connected by means of an elongated flexible non-elastic connection means (8) having a length so as to define a predetermined maximum longitudinal prestress and thereby a maximum longitudinal relative elongation of the inlet pipe (6) during use when the floating device (9) is subjected to a buoyancy force.

2. Device according to claim 1, wherein such spacing is provided between the top and bottom cap member (9, 10) by means of the connection means (8) that the flexible material of the inlet pipe (6) obtains a predetermined maximum longitudinal relative elongation and/or a predetermined maximum longitudinal relative slack for proper operation of the device.

3. Device according to claims 1 and/or 2, wherein the connection means (8) has such a length that the relative longitudinal slack or relative longitudinal elongation of the inlet pipe is within +/- 10 %.

4. Device according to any of the preceding claims, wherein the connection means (8) comprises a single flexible element centrally connected to the top cap member and the bottom cap member, respectively.

5. Device according to any of the preceding claims, wherein the top cap member (9) is configured as a floating device providing the buoyancy needed for ensuring a vertical position of the stratification device during use.

6. Device according to any of the preceding claims, wherein the bottom cap member (10) and the top cap member (9) each comprise a first ledge (12; 13) with a first circumference corresponding to the circumference of the inlet pipe (6), the lower end of the inlet pipe (6) being connected to the first ledge (13) of the bottom cap member (10) and the upper end of the inlet pipe (6) being connected to the first ledge (12) of the top cap member (9).

7. Device according to any of the preceding claims, wherein at least one outer pipe (7) surrounds the inlet pipe (6) in spaced relation thereto and being at least partially formed of a flexible porous material having outlets formed of the pores of the flexible material and having a lower end being connected to the bottom cap member (9) outwardly spaced from the inlet pipe (6) and an upper end being connected to the top cap member (9) outwardly spaced from the inlet pipe (6).

8. Device according to any of the preceding claims, wherein the bottom cap member (10) and the top cap member (9) each comprises a second ledge (14, 15) with a large circumference larger than that of that corresponding to the circumference of the inlet pipe (6), the large circumference of the second ledge corresponds to the circumference of the outer pipe (7), the lower end of the outer pipe (7) being connected to the second ledge (15) of the bottom top cap member (10) and the upper end of the outer pipe (7) being connected to the second ledge (14) of the top cap member (9).

9. Device according to any of the preceding claims, wherein the inlet pipe (6) is a closed pipe apart from the inlet passage way (16) of the bottom cap member (10) and the outlets and surfaces of the inlet pipe (6) and the outer pipe (7) are concentric and parallel where the temperature of the fluid outside of the device is substantially equal to the temperature of the fluid inside the device.

10. Device according to any of the preceding claims, wherein the flexible porous material of the pipe(s) is/are a fabric.

11. Device according to any of the preceding claims, wherein the area of the cross-sectional shape of the inlet pipe (6) is less at the lower end than at the upper end thereof.

12. Device according to claim 11, wherein the cross-sectional shape of the upper end of the pipe(s) is/are chosen so as to optimise the area to circumference ratio, optimally circular, and at the lower end uplong with a major axis D and a minor axis d.

13. Device according to claim 12, wherein the major axis D is 1.3-20 times longer than the minor axis d, preferably 1.5-10, and alternatively 2-5 times longer than the minor axis d.

14. Device according to any of the preceding claims, wherein the inlet passage way (16) of the bottom cap member (10) has a cross-section that gradually changes from a circular shape to an uplong shape as seen from an outer lower end to an upper inner end of the bottom cap member.

15. A tank comprising an inlet stratification device according to any of the preceding claims 1-14.
